# EUROPÄISCHE PATENTSCHRIFT

(11) **EP 4 069 051 B1**
(45) Veröffentlichungstag und Bekanntmachung des Hinweises auf die Patenterteilung: **22.04.2026**
(21) Anmeldenummer: 20808365.9
(22) Anmeldetag: 17.11.2020
(51) Int. Cl.: A47L 15/42, D06F 37/42

(54) **WASSERFÜHRENDES HAUSHALTSGERÄT UND VERFAHREN ZUM BETREIBEN EINES WASSERFÜHRENDEN HAUSHALTSGERÄTS**
WATER-USING DOMESTIC APPLIANCE AND METHOD FOR OPERATING A WATER-USING DOMESTIC APPLIANCE
APPAREIL ÉLECTROMÉNAGER UTILISANT DE L'EAU ET PROCÉDÉ DE FONCTIONNEMENT D'UN APPAREIL ÉLECTROMÉNAGER UTILISANT DE L'EAU

(30) Priorität: 05.12.2019 DE 102019219014
(43) Veröffentlichungstag der Anmeldung: 12.10.2022
(73) Patentinhaber: BSH Hausgeräte GmbH, 81739 München (DE)
(72) Erfinder: LUTZ, Stephan, 86637 Zusamaltheim (DE); POLLITHY, Stefan, 86735 Forheim (DE); WECKER, Markus, 89355 Gundremmingen (DE); KLEIN, Jürgen, 86485 Biberbach (DE)
(86) Internationale Anmeldenummer: PCT/EP2020/082380
(87) Internationale Veröffentlichungsnummer: WO 2021/110408

(56) Entgegenhaltungen:
- EP-A1- 2 105 527
- EP-A2- 1 988 207

## Beschreibung

Die vorliegende Erfindung betrifft ein wasserführendes Haushaltsgerät und ein Verfahren zum Betreiben eines wasserführenden Haushaltsgeräts.

In bekannten wasserführenden Haushaltsgeräten werden verschiedene elektrische Verbraucher eingesetzt. Diese können direkt mit einer Netzspannung oder aber mittels einer Spannungsquelle, die eine bestimmte Spannung bereitstellt, betrieben werden. Derartige elektrische Verbraucher weisen ein bestimmtes Ausfallrisiko auf. Bei einem Ausfall eines solchen Verbrauchers, beispielsweise wegen eines Defekts, muss sichergestellt sein, dass dies nicht zu weiteren Problemen, wie beispielsweise einem Entzünden eines Kunststoffbauteils, führen kann. Hierfür sind bestimmte Sicherungsmaßnahmen vorgesehen, wie beispielsweise eine großzügige Auslegung der elektrischen Schaltkreise, elektrische Schutzschaltungen und die Verwendung von entsprechend robusten Materialien.

Die EP 1 594 227 A2 beschreibt eine elektrische Schaltung zum Schalten eines Magnetventils, wobei das Magnetventil zum Einschalten einer Spannung angesprochen wird, welche nach dem Ablauf eines Zeitintervalls reduziert wird. Die EP 0 091 648 A1 beschreibt eine weitere elektrische Schaltung, mit welcher ein Magnetventil mit zwei Spannungsebenen betrieben werden kann.

Die EP 2 105 527 A1 offenbart eine Vorrichtung und ein Verfahren zur Ansteuerung eines Elektromagneten, welcher ein Türschloss einer Waschmaschine schließt und wieder freigibt, wobei die Abkühlzeit eines PTCs ausgenutzt wird, um ein vorzeitiges Öffnen der Tür der Waschmaschine zu verhindern.

Vor diesem Hintergrund besteht eine Aufgabe der vorliegenden Erfindung darin, ein verbessertes wasserführendes Haushaltsgerät bereitzustellen.

Gemäß einem ersten Aspekt wird ein wasserführendes Haushaltsgerät, insbesondere eine Geschirrspülmaschine, mit zumindest einem elektrisch ansteuerbaren Stellglied vorgeschlagen. Das wasserführende Haushaltsgerät weist eine erste Spannungsquelle zum Bereitstellen einer Einschaltleistung an das Stellglied und eine zweite Spannungsquelle zum Bereitstellen zumindest einer Halteleistung an das Stellglied auf. Eine Steuerungseinheit ist dazu eingerichtet, zum Einschalten des Stellglieds die erste Spannungsquelle elektrisch mit dem Stellglied zu verbinden, und nach einem Einschaltintervall die erste Spannungsquelle elektrisch von dem Stellglied zu trennen und die zweite Spannungsquelle elektrisch mit dem Stellglied zu verbinden.

Dieses wasserführende Haushaltsgerät weist mehrere Vorteile auf. Durch die Verwendung von zwei Spannungsquellen können diese jeweils in einer kleineren Leistungsstufe ausgelegt werden, so dass sie einfacher aufgebaut sein können, weniger Material und weniger Bauraum beanspruchen, und eine höhere Betriebssicherheit aufweisen. Weiterhin lässt sich Energie einsparen, da das Stellglied nach dem Einschalten, in der Haltephase, mit einer geringeren Leistung, insbesondere mit einer geringeren Spannung, als in der Einschaltphase betrieben werden kann. Ferner können die Spannungsquellen exakter auf eine vorbestimmte Last hin optimiert werden, so dass diese eine höhere Effizienz erreichen. Zudem kann eine Einschaltdauer des Stellglieds verkürzt werden, wenn das Stellglied zum Beispiel mit einer höheren Einschaltspannung beaufschlagt wird, da es dann schneller anspricht. Ferner kann die erste Spannungsquelle, nachdem sie von dem Stellglied elektrisch getrennt wurde, zum Einschalten von weiteren Stellgliedern verwendet werden, ohne dass sie mit dem Betrieb eines Stellglieds bereits vorbelastet ist.

Das Stellglied kann ein Gleichstromverbraucher oder auch ein Wechselstromverbraucher sein, wobei die Spannungsquelle in Abhängigkeit hiervon entsprechend zum Ausgeben eines Gleichspannungssignals oder eines Wechselspannungssignals eingerichtet ist. Das Stellglied umfasst beispielsweise einen Elektromotor, ein Magnetventil, einen thermischen Aktor oder dergleichen mehr.

Das Stellglied weist einen Einschaltzustand und einen Ausschaltzustand auf. In dem Ausschaltzustand ist das Stellglied inaktiv, das heißt, es ist in einer Ruheposition. Die Ruheposition kann bei einem Ventil beispielsweise offen oder geschlossen sein. In dem Ausschaltzustand verbraucht das Stellglied insbesondere keine elektrische Energie.

Um das Stellglied einzuschalten, das heißt, von dem Ausschaltzustand in den Einschaltzustand zu versetzen, benötigt das Stellglied eine Einschaltleistung. Die Einschaltleistung ist insbesondere eine höhere Leistung als die Halteleistung, die eine zum Halten des Stellglieds in dem Einschaltzustand benötigte Leistung ist. Dies kann beispielsweise daran liegen, dass zum Einschalten des Stellglieds elektrische Energie benötigt wird, um ein Magnetfeld aufzubauen, einen Rotor in eine Drehbewegung zu versetzen oder auch ein Heizelement eines thermischen Aktors auf eine bestimmte Temperatur zu bringen.

Die erste und die zweite Spannungsquelle sind zum Ausgeben eines Spannungssignals eingerichtet. Ein Spannungssignal kann insbesondere durch eine bestimmte Spannung, einen bestimmten Strom sowie eine bestimmte Frequenz charakterisiert sein. Ferner kann auch eine Wellenform, beispielsweise ein Sinussignal, Rechtecksignal, ein Sägezahnsignal oder dergleichen für ein Spannungssignal spezifisch sein. Insofern kann die Spannungsquelle einen Funktionsgenerator umfassen. Das Spannungssignal ist vorzugsweise spezifisch für das Stellglied ausgelegt, so dass das Spannungssignal die benötigte Einschaltleistung oder die benötigte Halteleistung speziell angepasst für das Stellglied bereitstellt.

Vorzugsweise sind die Spannungsquellen derart ausgestaltet, dass diese eine bestimmte konstante Spannung ausgeben. Insbesondere bei Stellgliedern, die sich wie ein Ohm'scher Widerstand verhalten, führt die konstante Spannung zu einer bestimmten Leistung. Bei einem konstanten elektrischen Widerstand des Stellglieds ist auch die Leistung konstant.

Die erste und die zweite Spannungsquelle sind zum Anschließen an ein Stromnetz, beispielsweise ein öffentliches Stromnetz, eingerichtet. Das öffentliche Stromnetz kann unterschiedlich ausgebildet sein, insbesondere bezüglich einer Spannung und/oder Frequenz. Die jeweilige Spannungsquelle ist vorzugsweise dazu eingerichtet, das Spannungssignal unabhängig von der Spezifikation des verbundenen Stromnetzes auszugeben. Damit ist ein Betrieb des wasserführenden Haushaltsgeräts in verschiedenen Regionen auf der Welt möglich, ohne dass Anpassungen an den Spannungsquellen vorgenommen werden müssten.

Indem das Stellglied elektrisch mit der ersten Spannungsquelle, die die Einschaltleistung bereitstellt, verbunden wird, wird das Stellglied eingeschaltet. In Abhängigkeit der Art des Stellglieds sowie beispielsweise einer Spannung des ausgegebenen Spannungssignals benötigt das Stellglied eine gewisse Zeit, um in einen stabilen Einschaltzustand zu gelangen. Diese Zeit wird vorliegend als das Einschaltintervall bezeichnet. Das Einschaltintervall kann beispielsweise Werte zwischen einigen µs bis hin zu mehreren Sekunden aufweisen. Das Einschaltintervall kann für das Stellglied durch eine vorbestimmte Zeit festgelegt sein. Beispielsweise kann für einen Elektromotor ein Einschaltintervall von drei Sekunden vorgegeben sein. Es kann aber auch vorgesehen sein, dass ein Sensor eine Position oder einen Betriebszustand des Stellglieds erfasst und in Abhängigkeit dessen die Steuerungseinheit ermittelt, wann das Stellglied den stabilen Einschaltzustand erreicht hat, so dass zwischen den Spannungsquellen umgeschaltet werden kann. Beispielsweise kann bei einem Elektromotor vorgesehen sein, dass dieser eine bestimmte Drehzahl erreicht hat und für wenigstens eine halbe Sekunde diese Drehzahl konstant hält.

Wenn der Einschaltzustand erreicht ist, das heißt, dass das Stellglied einen stabilen Betriebszustand erreicht hat, ist es ausreichend, dem Stellglied die Halteleistung bereitzustellen, um es eingeschaltet zu halten. Die Halteleistung ist beispielweise eine Verlustleistung, die das Stellglied in dem Einschaltzustand verbraucht. Zum Bereitstellen der Halteleistung wird die zweite Spannungsquelle elektrisch mit dem Stellglied verbunden.

Wenn die zweite Spannungsquelle von dem Stellglied elektrisch getrennt wird, dann geht das Stellglied in den Ausschaltzustand über.

Die Steuerungseinheit kann als eine eigenständige elektrische Schaltung oder auch als ein Bestandteil einer das wasserführende Haushaltsgerät steuernden Steuerungsvorrichtung ausgebildet sein.

Die Steuerungseinheit kann hardwaretechnisch und/oder softwaretechnisch implementiert sein. Bei einer hardwaretechnischen Implementierung kann die Steuerungseinheit zum Beispiel als Computer oder als Mikroprozessor ausgebildet sein. Bei einer softwaretechnischen Implementierung kann die Steuerungseinheit als Computerprogrammprodukt, als eine Funktion, als eine Routine, als Teil eines Programmcodes oder als ausführbares Objekt ausgebildet sein.

Bei der erfindungsgemäßen Ausführungsform des wasserführenden Haushaltsgeräts ist eine von dem Stellglied aufgenommene Einschaltleistung größer als 50% einer maximalen Ausgangsleistung der ersten Spannungsquelle.

Wenn die erste Spannungsquelle eine vergleichsweise geringe maximale Ausgangsleistung aufweist, insbesondere mit geringen Leistungsreserven im Hinblick auf eine zu erwartende dauerhafte oder auch Spitzenbelastung, kann die Spannungsquelle auch vergleichsweise einfach aufgebaut sein und damit günstig hergestellt werden. Eine entsprechend einfach aufgebaute Spannungsquelle ist insbesondere nicht in der Lage, die Einschaltleistung für zwei solche Stellglieder gleichzeitig bereitzustellen. Vorliegend ist es dennoch möglich, mit nur einer Spannungsquelle mehrere unterschiedliche Stellglieder einzuschalten, wenn diese nacheinander eingeschaltet werden.

Die maximale Ausgangsleistung der Spannungsquelle kann von dieser vorzugsweise für die Dauer des Einschaltintervalls bereitgestellt werden. Die maximale Ausgangsleistung kann aber auch eine Dauerleistung der Spannungsquelle sein.

Gemäß einer weiteren Ausführungsform des wasserführenden Haushaltsgeräts umfasst dieses eine Mehrzahl von elektrisch ansteuerbaren Stellgliedern. Die erste Spannungsquelle ist zum Bereitstellen der Einschaltleistung für jedes einzelne Stellglied der Mehrzahl eingerichtet und die zweite Spannungsquelle ist zum gleichzeitigen Bereitstellen der Halteleistung für zumindest zwei Stellglieder der Mehrzahl eingerichtet. Die Steuerungseinheit ist ferner dazu eingerichtet, zum Einschalten von zumindest zwei Stellgliedern der Mehrzahl die erste Spannungsquelle elektrisch mit einem ersten Stellglied der Mehrzahl zu verbinden, und nach dem Einschaltintervall des ersten Stellglieds die erste Spannungsquelle elektrisch von dem ersten Stellglied zu trennen und die zweite Spannungsquelle elektrisch mit dem ersten Stellglied zu verbinden, und die erste Spannungsquelle elektrisch mit einem weiteren Stellglied der Mehrzahl zu verbinden, und nach dem Einschaltintervall des weiteren Stellglieds die erste Spannungsquelle elektrisch von dem weiteren Stellglied zu trennen und die zweite Spannungsquelle elektrisch mit dem weiteren Stellglied zu verbinden.

Diese Ausführungsform hat den Vorteil, dass eine Mehrzahl von Stellgliedern mit nur zwei Spannungsquellen, die jeweils relativ klein oder schwach ausgelegt sein können, betrieben werden kann. Hierzu werden die Stellglieder sequenziell, das heißt zeitlich nacheinander, eingeschaltet. Die Mehrzahl von Stellgliedern kann unterschiedliche Stellglieder umfassen, die verschiedene Einschaltleistungen und/oder Halteleistungen und/oder Einschaltintervalle aufweisen können. Die erste Spannungsquelle ist insbesondere so ausgelegt, dass sie zum Bereitstellen der höchsten Einschaltleistung, die eines der Stellglieder der Mehrzahl aufweist, eingerichtet ist. Die zweite Spannungsquelle ist so ausgelegt, dass sie zum gleichzeitigen Bereitstellen der Halteleistung von wenigstens zwei Stellgliedern der Mehrzahl eingerichtet ist.

Gemäß einer weiteren Ausführungsform des wasserführenden Haushaltsgeräts umfasst dieses eine Mehrzahl von zweiten Spannungsquellen, wobei eine jeweilige zweite Spannungsquelle der Mehrzahl zumindest einem Stellglied zugeordnet ist und zum Bereitstellen der Halteleistung für das zumindest eine zugeordnete Stellglied eingerichtet ist.

Diese Ausführungsform ist vorteilhaft, da es möglich ist, jede der zweiten Spannungsquellen auf eine vorbestimmte Maximalleistung und/oder zum Ausgeben eines vorbestimmten Spannungssignals in Abhängigkeit des zugeordneten Stellglieds oder der zugeordneten Stellglieder auszulegen. Damit lassen sich beispielsweise Auflagen bezüglich einer Betriebssicherheit einfach erfüllen und zugleich die Spannungsquellen optimal auslegen, so dass diese einen sehr guten Wirkungsgrad aufweisen, wodurch ein Energieverbrauch des wasserführenden Haushaltsgeräts optimiert wird.

Gemäß einer weiteren Ausführungsform des wasserführenden Haushaltsgeräts weisen die erste Spannungsquelle und / oder die zweite Spannungsquelle jeweils eine maximale Ausgangsleistung von 15 W auf.

Diese Ausführungsform hat den Vorteil, dass Stromkreise, deren maximale Leistung 15 W nicht überschreitet, beispielsweise gemäß der DIN EN 60335-1 als Niederleistungsstromkreise gelten, für welche Auflagen bezüglich der Betriebssicherheit geringer sind als für solche Stromkreise, die eine höhere Leistung als 15 W aufweisen. Dies ist vorteilhaft bezüglich einer Materialauswahl von Bauteilen, wie beispielsweise für ein Gehäuse oder Isolatoren, da diese bei Niederleistungsstromkreisen geringeren Brandschutzanforderungen unterliegen. Damit ist eine große Auswahl unterschiedlicher Materialien möglich, die günstiger sind, sich leichter verarbeiten lassen, bessere mechanische Eigenschaften aufweisen und weniger giftige Stoffe enthalten, als solche Materialien, die hohe Brandschutzanforderungen erfüllen müssen. Insgesamt lassen sich bei dieser Ausführungsform daher Ressourcen und Kosten einsparen und zugleich die Umwelt schonen.

Gemäß einer weiteren Ausführungsform des wasserführenden Haushaltsgeräts weist die erste Spannungsquelle eine konstante Ausgangsspannung von bis zu 48 V, bevorzugt bis zu 24 V, weiter bevorzugt bis zu 12 V, auf und die zweite Spannungsquelle weist eine konstante Ausgangsspannung von bis zu 48 V, bevorzugt bis zu 24 V, weiter bevorzugt bis zu 12 V, auf.

Diese Ausführungsform hat den Vorteil, dass bei geringer Ausgangsspannung geringere Anforderungen bezüglich einer Isolierung von das Spannungssignal führenden Leitungen sowie daran angeschlossenen Stellgliedern und/oder Stromkreisen bestehen. Daher können bei einer solchen Auslegung Ressourcen und Kosten eingespart werden.

Unter einer konstanten Ausgangsspannung sind nicht nur Gleichspannungssignale zu verstehen, vielmehr ist auch eine Wechselspannung mit einem Effektivwert des angegebenen Spannungswerts hiervon umfasst.

Die Spannungsquellen weisen insbesondere eine spezifische elektrische Schaltung auf, die zum Ausgeben ausschließlich der konstanten Ausgangsspannung ausgebildet sind. Das ausgegebene Spannungssignal ist insbesondere kein Pulsweiten-moduliertes Spannungssignal, sondern ein Spannungssignal mit einer bestimmten, fest eingestellten Charakteristik. Eine jeweilige Spannungsquelle kann dabei Schaltungen zum Ausgeben unterschiedlicher Spannungssignale aufweisen, beispielsweise eine Schaltung zum Ausgeben eine 24 V-Spannungssignals und eine weitere Schaltung zum Ausgeben eines 12 V-Spannungssignals.

Indem die Spannungsquellen keine pulsweiten-modulierten Spannungssignale ausgeben, sind damit in Verbindung stehende Probleme, wie beispielsweise ein hochfrequentes Störgeräusch, sogenanntes Fiepen, oder eine Abstrahlung von elektromagnetischer Störstrahlung durch einen entsprechenden Schaltkreis vermieden werden.

Gemäß einer weiteren Ausführungsform des wasserführenden Haushaltsgeräts weist die erste Spannungsquelle eine höhere, insbesondere eine wenigstens doppelt so hohe, Ausgangsspannung als die zweite Spannungsquelle auf.

Diese Ausführungsform macht es besonders einfach, das Stellglied in der Haltephase mit einer reduzierten Leistung zu betreiben.

Gemäß einer weiteren Ausführungsform des wasserführenden Haushaltsgeräts beträgt eine Haltespannung des Stellglieds höchstens 70%, bevorzugt höchstens 50%, weiter bevorzugt höchstens 35%, weiter bevorzugt höchstens 25%, einer Einschaltspannung des Stellglieds.

Die Einschaltspannung ist die zum Einschalten des Stellglieds verwendete oder benötigte Spannung. Die Haltespannung ist die zum Halten des Stellglieds in dem eingeschalteten Zustand verwendete oder benötigte Spannung.

Bei mehreren Stellgliedern kann das Verhältnis von Einschaltspannung zu Haltespannung für jedes Stellglied unterschiedlich sein.

Gemäß einer weiteren Ausführungsform des wasserführenden Haushaltsgeräts beträgt die Halteleistung des Stellglieds höchstens 70%, bevorzugt höchstens 50%, weiter bevorzugt höchstens 35%, weiter bevorzugt höchstens 25%, der Einschaltleistung des Stellglieds.

Bei mehreren Stellgliedern kann das Verhältnis von Einschaltleistung zu Halteleistung für jedes Stellglied unterschiedlich sein.

Gemäß einer weiteren Ausführungsform des wasserführenden Haushaltsgeräts ist die Steuerungseinheit zum Umschalten von der ersten Spannungsquelle auf die zweite Spannungsquelle für das Stellglied innerhalb einer Umschaltzeit, die kürzer als eine Ausschaltzeit des Stellglieds ist, eingerichtet.

Wenn das Stellglied von einer Spannungsquelle getrennt wird, dass geht es in den Ausschaltzustand über. Dieser Übergang erfolgt nicht instantan, sondern dauert eine gewisse Zeit, da beispielsweise ein Rotor eines Elektromotors im Betrieb eine gewisse Rotationsenergie aufweist, die beim Ausschalten dissipiert wird. Man kann daher auch von einer Trägheit des Stellglieds sprechen. Um zu verhindern, dass das Stellglied in den Ausschaltzustand übergeht, ist die Halteleistung dem Stellglied innerhalb der Umschaltzeit bereitzustellen, was in dieser Ausführungsform sichergestellt ist. Damit ist der Betrieb des Stellglieds gewährleistet.

Bei mehreren Stellgliedern kann die Umschaltzeit unterschiedlich lang sein.

Gemäß einer weiteren Ausführungsform des wasserführenden Haushaltsgeräts ist die Steuerungseinheit zum Umschalten von der ersten Spannungsquelle auf die zweite Spannungsquelle derart eingerichtet, dass während eines Umschaltintervalls die erste Spannungsquelle und die zweite Spannungsquelle gleichzeitig mit dem Stellglied verbunden sind.

In dieser Ausführungsform ist es ausgeschlossen, dass das Stellglied während des Umschaltens in den Ausschaltzustand übergeht. Dies kann insbesondere bei sehr schnell ansprechenden Stellgliedern, die eine geringe Trägheit aufweisen, zur Sicherstellung des Betriebs beitragen.

Die Steuerungseinheit kann für unterschiedliche Stellglieder unterschiedliche Umschaltintervalle anwenden.

Gemäß einer weiteren Ausführungsform des wasserführenden Haushaltsgeräts ist in einer elektrischen Verbindung zwischen der zweiten Spannungsquelle und dem Stellglied eine Diode derart angeordnet ist, dass ein Stromfluss von der ersten Spannungsquelle zu der zweiten Spannungsquelle unterbunden ist.

Diese Ausführungsform ist sinnvoll, wenn die erste Spannungsquelle zum Einschalten eine höhere Spannung an das Stellglied bereitstellt als die zweite Spannungsquelle für das eingeschaltet Halten Stellglieds bereitstellt.

Gemäß einer weiteren Ausführungsform des wasserführenden Haushaltsgeräts umfasst das Stellglied einen elektromagnetischen Aktor, insbesondere ein Magnetventil oder ein Elektromotor, und/oder einen thermoelektrischen Aktor, insbesondere einen Bimetallaktor, einen Phasenübergangsaktor, eine Formgedächtnislegierung, ein Kaltleiter und/oder ein Heizelement.

Gemäß einem weiteren Aspekt wird ein Verfahren zum Betreiben eines wasserführenden Haushaltsgeräts, insbesondere einer Geschirrspülmaschine, mit zumindest einem elektrisch ansteuerbaren Stellglied vorgeschlagen. In einem ersten Schritt wird das Stellglied mit einer ersten Spannungsquelle zum Bereitstellen einer Einschaltleistung zum Einschalten des Stellglieds elektrisch verbunden. In einem zweiten Schritt wird die erste Spannungsquelle von dem Stellglied nach Ablauf eines Einschaltintervalls getrennt. In einem dritten Schritt wird das Stellglied mit einer zweiten Spannungsquelle zum Bereitstellen einer Halteleistung elektrisch verbunden.

Dieses Verfahren wird erfindungsgemäß mit einem wasserführenden Haushaltsgerät gemäß dem ersten Aspekt durchgeführt.

Die angegebene Reihenfolge der Schritte ist nicht zwingend, insbesondere kann die zweite Spannungsquelle bereits mit dem Stellglied elektrisch verbunden werden, bevor die erste Spannungsquelle von dem Stellglied elektrisch getrennt ist. Dann ergibt sich ein Umschaltintervall, während dessen beide Spannungsquellen mit dem Stellglied elektrisch verbunden sind.

Des Weiteren kann nach dem Verbinden des Stellglieds mit der ersten Spannungsquelle die vom Stellglied aufgenommene Einschaltleistung mittels einer Leistungsmesseinrichtung gemessen und mit einem in einer Steuerung hinterlegtem Sollwert für das Stellglied verglichen werden. Das Stellglied wird nur dann mit der zweiten Spannungsquelle verbunden, wenn die vom Stellglied aufgenommene Einschaltleistung den Sollwert nicht überschreitet.

Diese Ausführungsform bietet den Vorteil, dass es für das Erreichen der Anforderungen eines Niederleistungsstromkreises ausreicht, nur die erste Spannungsquelle als Niederleistungsspannungsquelle auszuführen, da ein Umschalten eines defekten Stellgliedes auf die zweite Spannungsquelle unterbleibt.

Gemäß einer weiteren Ausführungsform des Verfahrens umfasst dieses ferner: Verbinden der ersten Spannungsquelle mit einem weiteren Stellglied, nachdem die erste Spannungsquelle von dem Stellglied getrennt wurde, zum Einschalten des weiteren Stellglieds; Trennen der ersten Spannungsquelle von dem weiteren Stellglied nach Ablauf eines Einschaltintervalls; und Verbinden des weiteren Stellglieds mit der zweiten Spannungsquelle zum eingeschaltet Halten des weiteren Stellglieds.

In dieser Ausführungsform werden mehrere Stellglieder sequenziell nacheinander eingeschaltet. Die erste Spannungsquelle wird daher zu einem Zeitpunkt immer nur mit einem Stellglied belastet, weshalb eine Maximalleistung der ersten Spannungsquelle entsprechend einer maximal geforderten Einschaltleistung gewählt werden kann. Die zweite Spannungsquelle hingegen versorgt wenigstens zwei Stellglieder zeitgleich mit der Halteleistung. Da die Halteleistung der Stellglieder vergleichsweise gering ist, kann die zweite Spannungsquelle mehrere der Stellglieder gleichzeitig mit ihrer jeweiligen Halteleistung versorgen. Das Einschaltintervall bezieht sich hierbei auf das jeweilige Stellglied, welches für unterschiedliche Stellglieder unterschiedlich sein kann.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für das vorgeschlagene wasserführende Haushaltsgerät beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische perspektivische Ansicht eines Ausführungsbeispiels eines wasserführenden Haushaltsgeräts;
Fig. 2 zeigt ein schematisches Blockschaltbild eines Ausführungsbeispiels einer elektrischen Schaltung;
Fig. 3A zeigt ein beispielhaftes Diagramm einer Leistungsabgabe der ersten und zweiten Spannungsquelle;
Fig. 3B zeigt ein weiteres beispielhaftes Diagramm einer Leistungsabgabe der ersten und zweiten Spannungsquelle; und
Fig. 4 zeigt ein schematisches Blockschaltbild eines Verfahrens zum Betreiben eines wasserführenden Haushaltsgeräts.

In den Figuren sind gleiche oder funktionsgleiche Elemente mit denselben Bezugszeichen versehen worden, sofern nichts anderes angegeben ist.

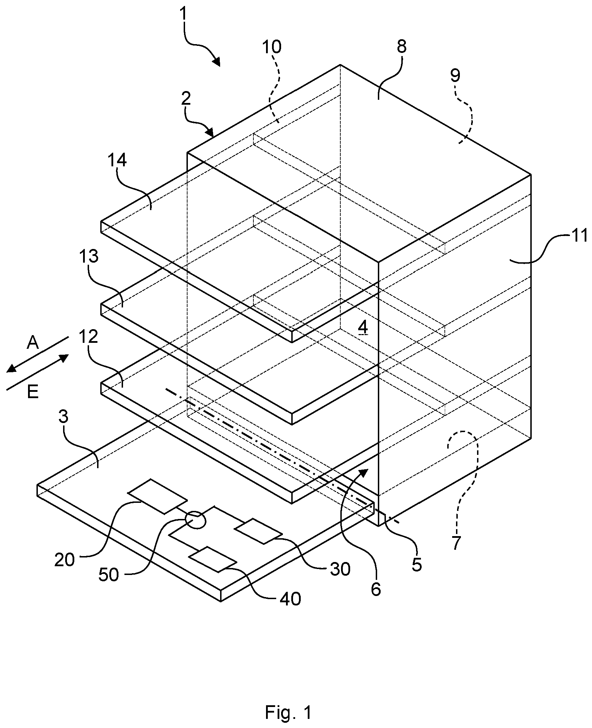

Die Fig. 1 zeigt eine schematische perspektivische Ansicht einer Ausführungsform eines wasserführenden Haushaltsgeräts 1, das hier als eine Haushalts-Geschirrspülmaschine ausgebildet ist. Die Haushalts-Geschirrspülmaschine 1 umfasst einen Spülbehälter 2, der durch eine Tür 3, insbesondere wasserdicht, verschließbar ist. Hierzu kann zwischen der Tür 3 und dem Spülbehälter 2 eine Dichteinrichtung vorgesehen sein. Der Spülbehälter 2 ist vorzugweise quaderförmig. Der Spülbehälter 2 kann in einem Gehäuse der Haushalts-Geschirrspülmaschine 1 angeordnet sein. Der Spülbehälter 2 und die Tür 3 können einen Spülraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. Der Spülbehälter 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

Die Haushalts-Geschirrspülmaschine 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Spülbehälter 2 angeordnet. Jede Spülgutaufnahme 12 bis 14 ist wahlweise in den Spülbehälter 2 hinein- oder aus diesem herausverlagerbar. Insbesondere ist jede Spülgutaufnahme 12 bis 14 in einer Einschub-richtung E in den Spülbehälter 2 hineinschiebbar oder hineinfahrbar und entgegen der Einschubrichtung E in einer Auszugsrichtung A aus dem Spülbehälter 2 herausziehbar oder herausfahrbar.

An der Tür 3 weist die Haushalts-Geschirrspülmaschine 1 ferner ein elektrisch ansteuerbares Stellglied 20, das hier beispielsweise als ein Elektromotor für eine elektrische Türschließautomatik ausgebildet ist, auf. Der Elektromotor 20 ist zum Betrieb mit 12 V Gleichspannung ausgelegt. Eine erste Spannungsquelle 30 und eine zweite Spannungsquelle 40 sind vorgesehen. Die erste Spannungsquelle 30 und die zweite Spannungsquelle 40 sind derart ausgebildet, dass deren maximale Ausgangsleistung unter 15 W liegt. Die erste Spannungsquelle 30 weist dabei eine Ausgangsspannung von 24 V Gleichspannung auf, die zweite Spannungsquelle 40 weist eine Ausgangsspannung von 12 V Gleichspannung auf. Die Spannungsquellen 30, 40 sind an ein nicht dargestelltes, öffentliches Stromnetz angeschlossen, das beispielsweise eine 230 V Wechselspannung bei 50 Hz bereitstellt.

Eine Steuerungseinheit 50 schaltet die Spannungsquellen 30, 40 auf den Elektromotor 20. Zum Einschalten des Elektromotors 20, zum Beispiel um ein Schließen der Tür 3 zu veranlassen, schaltet die Steuerungseinheit 50 zunächst die erste Spannungsquelle 30 auf den Elektromotor 20. Diese stellt eine Einschaltleistung PE bereit, die hier mit einer Spannung von 24 V bereitgestellt wird. Mit der höheren Spannung von 24 V spricht der Elektromotor 20 schnell an und weist ein hohes Anlaufdrehmoment auf. Daher gelangt der Elektromotor 20 schnell in einen stabilen Betriebszustand. Sobald der Elektromotor 20 in dem stabilen Betriebszustand ist, beispielsweise, wenn er eine bestimmte Drehzahl erreicht hat, schaltet die Steuerungseinheit 50 von der ersten Spannungsquelle 30 auf die zweite Spannungsquelle 40 um. Dieses Umschalten geschieht in einer Zeitspanne, während der der Elektromotor 20 sich beispielsweise aufgrund seiner Trägheit noch weiterdreht, obwohl keine elektrische Leistung mehr zugeführt wird. Nach dem Umschalten ist die zweite Spannungsquelle 40 mit dem Elektromotor 20 verbunden und stellt diesem eine Halteleistung PH bereit, die vorliegend mit einer Spannung von 12 V bereitgestellt wird. Bei 12 V verbraucht der Elektromotor 20 weniger elektrische Energie und bleibt dennoch in einem stabilen Betriebszustand. Wenn die Tür 3 geschlossen ist, trennt die Steuerungseinheit 50 die zweite Spannungsquelle 40 von dem Elektromotor 20, womit dieser ausgeschaltet ist.

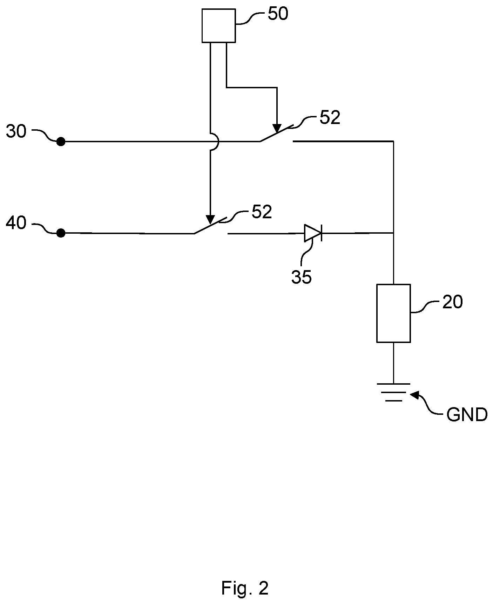

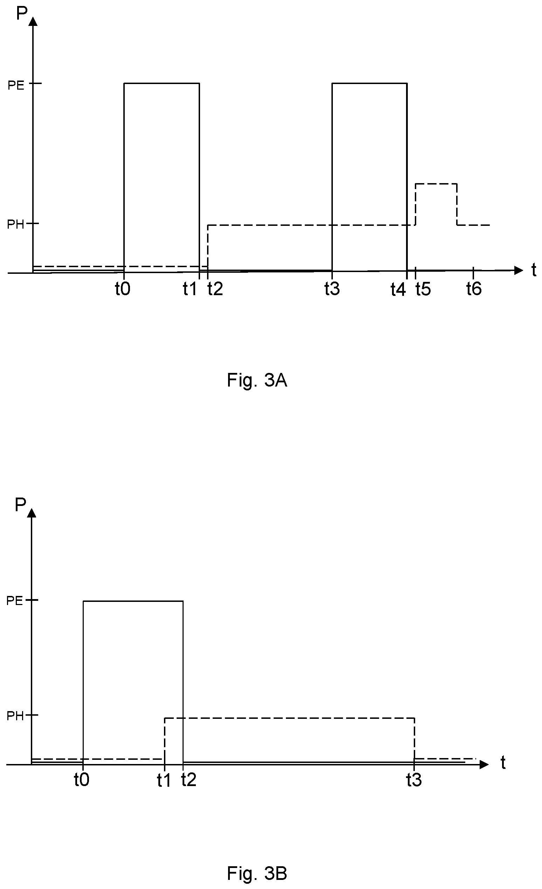

Fig. 2 zeigt ein schematisches Blockschaltbild eines Ausführungsbeispiels einer elektrischen Schaltung, gemäß welcher beispielsweise die Spannungsquellen 30, 40 an den Elektromotor 20 der Türschließautomatik gemäß Fig. 1 angeschlossen sind. Die Spannungsquellen 30, 40 sind jeweils mittels eines Schalters 52, der von der Steuerungseinheit 50 kontrolliert wird, mit dem Stellglied 20 verbindbar. Als Besonderheit ist in der Verbindung von der zweiten Spannungsquelle 40 zu dem Stellglied 20 eine Diode 35 angeordnet. Diese Diode 35 verhindert, dass, wenn zu einem Zeitpunkt beide Schalter 52 geschlossen sind, ein Strom von der ersten Spannungsquelle 30 in die zweite Spannungsquelle 40 fließt. Dies kann insbesondere dann auftreten, wenn die erste Spannungsquelle 30 eine höhere Spannung bereitstellt als die zweite Spannungsquelle 40. In den nachfolgenden Fig. 3A und 3B sind unterschiedliche Varianten eines Umschaltens durch die Steuerungseinheit 50 gezeigt.

Fig. 3A zeigt ein beispielhaftes Diagramm einer Leistungsabgabe der ersten und zweiten Spannungsquelle 30, 40 (siehe Fig. 1 oder 2). In diesem Beispiel werden zwei Stellglieder 20 (siehe Fig. 1 oder 2) nacheinander eingeschaltet und für gewisses Zeitintervall zeitgleich betrieben. Beispielsweise handelt es sich bei den Stellgliedern 20 um eine Umwälzpumpe und eine Laugenpumpe einer Haushalts-Geschirrspülmaschine. Das Diagramm zeigt auf der horizontalen Achse t eine Zeitkoordinate und auf der vertikalen Achse P eine Leistung, die von der ersten Spannungsquelle 30 (durchgezogenen Linie) sowie der zweiten Spannungsquelle 40 (gestrichelte Linie) jeweils abgegeben wird.

Zunächst sind die beiden Pumpen ausgeschaltet, weshalb beide Spannungsquellen 30, 40 keine Leistung abgeben. Zu einem Zeitpunkt t0 wird zuerst die Umwälzpumpe eingeschaltet. Daher gibt die erste Spannungsquelle 30 die Einschaltleistung PE an die Umwälzpumpe ab. Diese wird beispielsweise mit 48 V bereitgestellt. Nach Ablauf eines Einschaltintervalls, zum Zeitpunkt t1, ist die Umwälzpumpe in einem stabilen Betriebszustand. Nun wird die erste Spannungsquelle 30 von der Pumpe getrennt, weshalb die Leistung auf 0 zurückfällt. Nach einem kurzen Augenblick, zum Zeitpunkt t2, wird die zweite Spannungsquelle 40 mit der Pumpe verbunden und stellt fortan die Halteleistung PH bereit. Die zweite Spannungsquelle gibt ein 12 V-Spannungssignal aus. Die Halteleistung PH ist nur etwa 25% der Einschaltleistung PE, weshalb ein energiesparender Dauerbetrieb der Umwälzpumpe ermöglicht ist.

Zu einem späteren Zeitpunkt t3 wird die Laugenpumpe eingeschaltet, indem die erste Spannungsquelle 30 mit dieser verbunden wird. Nachdem die Laugenpumpe zu einem Zeitpunkt t4 einen stabilen Betriebszustand erreicht hat, wird zuerst die erste Spannungsquelle 30 von der Laugenpumpe getrennt und sofort anschließend, zum Zeitpunkt t5, die zweite Spannungsquelle 40 mit der Laugenpumpe verbunden. Nunmehr versorgt die zweite Spannungsquelle 40 sowohl die Umwälzpumpe als auch die Laugenpumpe mit elektrischer Leistung. Die abgegebene Leistung entspricht etwa dem doppelten der Halteleistung PH. Zu einem Zeitpunkt t6 wird die Umwälzpumpe abgeschaltet, das heißt, die zweite Spannungsquelle 40 wird von der Umwälzpumpe getrennt, weshalb die abgegebene Leistung wieder auf eine Halteleistung PH abfällt. Es sei angemerkt, dass unterschiedliche Stellglieder 20 unterschiedliche Einschaltleistungen PE und/oder Halteleistungen PH aufweisen können, auch wenn dies hier nicht so dargestellt ist.

Fig. 3B zeigt ein weiteres beispielhaftes Diagramm einer Leistungsabgabe der ersten und zweiten Spannungsquelle 30, 40. In der Fig. 3B ist nur ein Einschaltvorgang mit anschließendem Umschalten gezeigt. Der Unterschied zu den beiden in der Fig. 3A dargestellten Einschaltvorgängen mit anschließendem Umschalten ist, dass hier die zweite Spannungsquelle 40 zum Zeitpunkt t1 bereits mit dem Stellglied 20 verbunden wird, während die erste Spannungsquelle 30 noch mit dem Stellglied 20 verbunden ist. Die erste Spannungsquelle 30 wird erst zu einem Zeitpunkt t2 von dem Stellglied 20 getrennt. In dem Zeitintervall dt = (t2 - t1) sind daher beide Spannungsquellen 30, 40 mit dem Stellglied 20 verbunden. Dies ist insbesondere bei Stellgliedern 20, die sehr empfindlich auf Spannungsschwankungen reagieren können, sinnvoll, um sicherzustellen, dass diese nicht während des Umschaltens in den Ausschaltzustand übergehen.

Die Fig. 3A und 3B zeigen Diagramme, die sich auf die Leistung der Spannungsquellen 30, 40 beziehen. Es sei angemerkt, dass, sofern das angeschlossene Stellglied 20 ein Ohm'sches Verhalten aufweist, die dargestellten Verläufe durch eine entsprechende Ausgangsspannung erzielt werden.

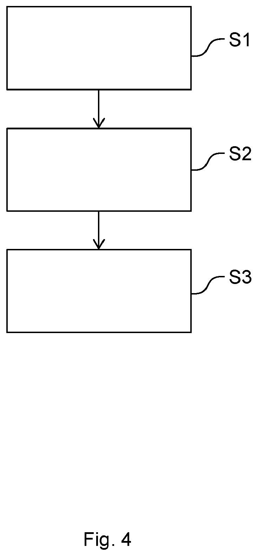

Fig. 4 zeigt ein schematisches Blockschaltbild eines beispielhaften Verfahrens zum Betreiben eines wasserführenden Haushaltsgeräts 1, beispielsweise der Haushalts-Geschirrspülmaschine der Fig. 1. In einem ersten Schritt S1 wird ein Stellglied 20 (siehe Fig. 1 oder 2) mit einer ersten Spannungsquelle 30 (siehe Fig. 1 oder 2) zum Bereitstellen einer Einschaltleistung PE (siehe Fig. 3A oder 3B) zum Einschalten des Stellglieds 20 elektrisch verbunden. In einem zweiten Schritt S2 wird die erste Spannungsquelle 20 von dem Stellglied 20 nach Ablauf eines Einschaltintervalls getrennt. In einem dritten Schritt S3 wird das Stellglied 20 mit einer zweiten Spannungsquelle 40 (siehe Fig. 1 oder 2) zum Bereitstellen einer Halteleistung PH (siehe Fig. 3A oder 3B) elektrisch verbunden.

In Ausführungsformen des Verfahrens kann der dritte Schritt S3 noch vor dem zweiten Schritt S2 erfolgen. Ferner kann dieses Verfahren mehrfach wiederholt werden, um mehrere Stellglieder 20 nacheinander einzuschalten und durch die zweite Spannungsquelle 40 zu betreiben.

Obwohl die vorliegende Erfindung anhand von Ausführungsbeispielen beschrieben wurde, ist sie vielfältig modifizierbar.

Verwendete Bezugszeichen:
- 1: wasserführendes Haushaltsgerät
- 2: Spülbehälter
- 3: Tür
- 4: Spülkammer
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme
- 13: Spülgutaufnahme
- 14: Spülgutaufnahme
- 20: Stellglied
- 30: Spannungsquelle
- 35: Diode
- 40: Spannungsquelle
- 50: Steuerungseinheit
- 52: Schalter

- A: Ausziehrichtung
- E: Einschubrichtung
- GND: Neutral-Potential
- P: Leistung
- PE: Einschaltleistung
- PH: Halteleistung
- S1: Verfahrensschritt
- S2: Verfahrensschritt
- S3: Verfahrensschritt
- t: Zeitachse
- t0: Zeitpunkt
- t1: Zeitpunkt
- t2: Zeitpunkt
- t3: Zeitpunkt
- t4: Zeitpunkt
- t5: Zeitpunkt
- t6: Zeitpunkt

## Patentansprüche

1. Wasserführendes Haushaltsgerät (1), insbesondere Geschirrspülmaschine, mit zumindest einem elektrisch ansteuerbaren Stellglied (20), einer ersten Spannungsquelle (30) zum Bereitstellen einer Einschaltleistung (PE) an das Stellglied (20) und einer zweiten Spannungsquelle (40) zum Bereitstellen zumindest einer Halteleistung (PH) an das Stellglied (20), und mit einer Steuerungseinheit (50), welche dazu eingerichtet ist, zum Einschalten des Stellglieds (20) die erste Spannungsquelle (30) elektrisch mit dem Stellglied (20) zu verbinden, und nach einem Einschaltintervall die erste Spannungsquelle (30) elektrisch von dem Stellglied (20) zu trennen und die zweite Spannungsquelle (40) elektrisch mit dem Stellglied (20) zu verbinden, **dadurch gekennzeichnet dass** eine von dem Stellglied (20) aufgenommene Einschaltleistung (PE) größer als 50% einer maximalen Ausgangsleistung der ersten Spannungsquelle (30) ist.

2. Wasserführendes Haushaltsgerät nach Anspruch 1, **gekennzeichnet durch** eine Mehrzahl von elektrisch ansteuerbaren Stellgliedern (20), wobei die erste Spannungsquelle (30) zum Bereitstellen der Einschaltleistung (PE) für jedes einzelne Stellglied (20) der Mehrzahl eingerichtet ist, und wobei die zweite Spannungsquelle (40) zum gleichzeitigen Bereitstellen der Halteleistung (PH) für zumindest zwei Stellglieder (20) der Mehrzahl eingerichtet ist, wobei die Steuerungseinheit (50) ferner dazu eingerichtet ist, zum Einschalten von zumindest zwei Stellgliedern (20) der Mehrzahl die erste Spannungsquelle (30) elektrisch mit einem ersten Stellglied (20) der Mehrzahl zu verbinden, und nach dem Einschaltintervall des ersten Stellglieds (20) die erste Spannungsquelle (30) elektrisch von dem ersten Stellglied (20) zu trennen und die zweite Spannungsquelle (40) elektrisch mit dem ersten Stellglied (20) zu verbinden, und die erste Spannungsquelle (30) elektrisch mit einem weiteren Stellglied (20) der Mehrzahl zu verbinden, und nach dem Einschaltintervall des weiteren Stellglieds (20) die erste Spannungsquelle (30) elektrisch von dem weiteren Stellglied (20) zu trennen und die zweite Spannungsquelle (40) elektrisch mit dem weiteren Stellglied (20) zu verbinden.

3. Wasserführendes Haushaltsgeräts nach einem der Ansprüche 1 - 2, **gekennzeichnet durch** eine Mehrzahl von zweiten Spannungsquellen (40), wobei eine jeweilige zweite Spannungsquelle (40) der Mehrzahl zumindest einem Stellglied (20) zugeordnet ist und zum Bereitstellen der Halteleistung (PH) für das zumindest eine zugeordnete Stellglied (20) eingerichtet ist.

4. Wasserführendes Haushaltsgerät nach einem der Ansprüche 1 - 3, **dadurch gekennzeichnet, dass** die erste Spannungsquelle (30) und / oder die zweite Spannungsquelle (40) jeweils eine maximale Ausgangsleistung von 15 W aufweisen.

5. Wasserführendes Haushaltsgerät nach einem der Ansprüche 1 - 4, **dadurch gekennzeichnet, dass** die erste Spannungsquelle (30) eine konstante Ausgangsspannung von bis zu 48 V, bevorzugt bis zu 24 V, weiter bevorzugt bis zu 12 V, und die zweite Spannungsquelle (40) eine konstante Ausgangsspannung von bis zu 48 V, bevorzugt bis zu 24 V, weiter bevorzugt bis zu 12 V, aufweist.

6. Wasserführendes Haushaltsgerät nach einem der Ansprüche 1 - 5, **dadurch gekennzeichnet, dass** die erste Spannungsquelle (30) eine höhere, insbesondere eine wenigstens doppelt so hohe, Ausgangsspannung als die zweite Spannungsquelle (40) aufweist.

7. Wasserführendes Haushaltsgerät nach einem der Ansprüche 1 - 6, **dadurch gekennzeichnet, dass** eine Haltespannung des Stellglieds (20) höchstens 70%, bevorzugt höchstens 50%, weiter bevorzugt höchstens 35%, weiter bevorzugt höchstens 25%, einer Einschaltspannung des Stellglieds (20) beträgt.

8. Wasserführendes Haushaltsgerät nach einem der Ansprüche 1 - 7, **dadurch gekennzeichnet, dass** die Halteleistung (PH) des Stellglieds (20) höchstens 70%, bevorzugt höchstens 50%, weiter bevorzugt höchstens 35%, weiter bevorzugt höchstens 25%, der Einschaltleistung (PE) des Stellglieds (20) ist.

9. Wasserführendes Haushaltsgerät nach einem der Ansprüche 1 - 8, **dadurch gekennzeichnet, dass** die Steuerungseinheit (50) zum Umschalten von der ersten Spannungsquelle (30) auf die zweite Spannungsquelle (40) innerhalb einer Umschaltzeit, die kürzer als eine Ausschaltzeit des Stellglieds (20) ist, eingerichtet ist.

10. Wasserführendes Haushaltsgerät nach einem der Ansprüche 1 - 9, **dadurch gekennzeichnet, dass** die Steuerungseinheit (50) zum Umschalten von der ersten Spannungsquelle (30) auf die zweite Spannungsquelle (40) derart eingerichtet ist, dass während eines Umschaltintervalls die erste Spannungsquelle (30) und die zweite Spannungsquelle (40) gleichzeitig mit dem Stellglied (20) verbunden sind.

11. Wasserführendes Haushaltsgerät nach Anspruch 10, **dadurch gekennzeichnet, dass** in einer elektrischen Verbindung zwischen der zweiten Spannungsquelle (40) und dem Stellglied (20) eine Diode (35) derart angeordnet ist, dass ein Stromfluss von der ersten Spannungsquelle (30) zu der zweiten Spannungsquelle (40) unterbunden ist.

12. Wasserführendes Haushaltsgerät nach einem der Ansprüche 1 - 11, **dadurch gekennzeichnet, dass** das Stellglied (20) einen elektromagnetischen Aktor und/oder einen thermoelektrischen Aktor umfasst.

13. Verfahren zum Betreiben eines wasserführenden Haushaltsgeräts (1), insbesondere einer Geschirrspülmaschine, mit zumindest einem elektrisch ansteuerbaren Stellglied (20), einer ersten Spannungsquelle (30) zum Bereitstellen einer Einschaltleistung (PE) an das Stellglied (20) und einer zweiten Spannungsquelle (40) zum Bereitstellen zumindest einer Halteleistung (PH) an das Stellglied (20), mit:
Verbinden (S1) des Stellglieds (20) mit der ersten Spannungsquelle (30) zum Bereitstellen einer Einschaltleistung (PE) zum Einschalten des Stellglieds (20);
Trennen (S2) der ersten Spannungsquelle (30) von dem Stellglied (20) nach Ablauf eines Einschaltintervalls; und
Verbinden (S3) des Stellglieds (20) mit der zweiten Spannungsquelle (40) zum Bereitstellen einer Halteleistung (PH) zum eingeschaltet Halten des Stellglieds (20), **dadurch gekennzeichnet, dass** eine von dem Stellglied (20) aufgenommene Einschaltleistung (PE) größer als 50% einer maximalen Ausgangsleistung der ersten Spannungsquelle (30) ist.

14. Verfahren nach Anspruch 13, ferner umfassend:
Verbinden der ersten Spannungsquelle (30) mit einem weiteren Stellglied (20), nachdem die erste Spannungsquelle (30) von dem Stellglied (20) getrennt wurde, zum Einschalten des weiteren Stellglieds (20);
Trennen der ersten Spannungsquelle (30) von dem weiteren Stellglied (20) nach Ablauf eines Einschaltintervalls; und
Verbinden des weiteren Stellglieds (20) mit der zweiten Spannungsquelle (40) zum eingeschaltet Halten des Stellglieds (20).

## Claims

1. Water-using household appliance (1), in particular dishwasher, comprising at least an electrically controllable actuator (20), a first voltage source (30) for providing a switch-on power amount (PE) to the actuator (20), a second voltage source (40) for providing at least a holding power amount (PH) to the actuator (20), and a control unit (50), which is designed to electrically connect the first voltage source (30) to the actuator (20) in order to switch on the actuator (20) and, after a switch-on interval, to electrically disconnect the first voltage source (30) from the actuator (20) and to electrically connect the second voltage source (40) to the actuator (20), **characterised in that** according to a switch-on power amount (PE) consumed by the actuator (20) is greater than 50% of a maximum output power of the first voltage source (30).

2. Water-using household appliance according to claim 1, **characterised by** a plurality of electrically controllable actuators (20), wherein the first voltage source (30) is designed to provide the switch-on power amount (PE) for each individual actuator (20) of the plurality thereof, and wherein the second voltage source (40) is designed to provide simultaneously the holding power amount (PH) for at least two actuators (20) of the plurality thereof, wherein the control unit (50) is also designed to switch on at least two actuators (20) of the plurality thereof in order to connect the first voltage source (30) electrically to a first actuator (20) of the plurality thereof, and after the switch-on interval of the first actuator (20) to disconnect the first voltage source (30) electrically from the first actuator (20) and to connect the second voltage source (40) electrically to the first actuator (20), and to connect the first voltage source (30) electrically to a further actuator (20) of the plurality thereof, and after the switch-on interval of the further actuator (20) to disconnect the first voltage source (30) electrically from the further actuator (20) and to connect the second voltage source (40) electrically to the further actuator (20).

3. Water-using household appliance according to one of claims 1 - 2, **characterised by** a plurality of second voltage sources (40), wherein one respective second voltage source (40) of the plurality thereof is assigned to at least one actuator (20) and is designed to provide the holding power amount (PH) for the at least one assigned actuator (20).

4. Water-using household appliance according to one of claims 1 - 3, **characterised in that** the first voltage source (30) and/or the second voltage source (40) in each case have a maximum output power of 15 W.

5. Water-using household appliance according to one of claims 1 - 4, **characterised in that** the first voltage source (30) has a constant output voltage of up to 48 V, preferably up to 24 V, further preferably up to 12 V, and the second voltage source (40) has a constant output voltage of up to 48 V, preferably up to 24 V, further preferably up to 12 V.

6. Water-using household appliance according to one of claims 1 - 5, **characterised in that** the first voltage source (30) has an output voltage which is higher, in particular at least twice as high, as the second voltage source (40).

7. Water-using household appliance according to one of claims 1 - 6, **characterised in that** a holding voltage of the actuator (20) is at most 70%, preferably at most 50%, further preferably at most 35%, further preferably at most 25%, of a switch-on voltage of the actuator (20).

8. Water-using household appliance according to one of claims 1 - 7, **characterised in that** the holding power amount (PH) of the actuator (20) is at most 70%, preferably at most 50%, further preferably at most 35%, further preferably at most 25%, of the switch-on power amount (PE) of the actuator (20).

9. Water-using household appliance according to one of claims 1 - 8, **characterised in that** the control unit (50) is designed to switch over from the first voltage source (30) to the second voltage source (40) within a switchover time which is shorter than a switch-off time of the actuator (20).

10. Water-using household appliance according to one of claims 1 - 9, **characterised in that** the control unit (50) is designed to switch over from the first voltage source (30) to the second voltage source (40) such that during a switchover interval the first voltage source (30) and the second voltage source (40) are connected simultaneously to the actuator (20).

11. Water-using household appliance according to claim 10, **characterised in that** a diode (35) is arranged in an electrical connection between the second voltage source (40) and the actuator (20) such that a current flow from the first voltage source (30) to the second voltage source (40) is prevented.

12. Water-using household appliance according to one of claims 1 - 11, **characterised in that** the actuator (20) comprises an electromagnetic actuator and/or a thermoelectric actuator.

13. Method for operating a water-using household appliance (1), in particular a dishwasher, comprising at least an electrically controllable actuator (20), a first voltage source (30) for providing a switch-on power amount (PE) to the actuator (20) and a second voltage source (40) for providing at least one holding power amount (PH) to the actuator (20), comprising:
connecting (S1) the actuator (20) to a first voltage source (30) for providing a switch-on power amount (PE) in order to switch on the actuator (20);
disconnecting (S2) the first voltage source (30) from the actuator (20) after the elapse of a switch-on interval; and
connecting (S3) the actuator (20) to the second voltage source (40) for providing a holding power amount (PH) in order to keep the actuator (20) switched on, **characterised in that** a switch-on power amount (PE) consumed by the actuator (20) is greater than 50% of a maximum output power of the first voltage source (30).

14. Method according to claim 13, further comprising:
connecting the first voltage source (30) to a further actuator (20) after the first voltage source (30) has been disconnected from the actuator (20), in order to switch on the further actuator (20);
disconnecting the first voltage source (30) from the further actuator (20) after the elapse of a switch-on interval; and
connecting the further actuator (20) to the second voltage source (40) in order to keep the actuator (20) switched on.

## Revendications

1. Appareil électroménager à circulation d'eau (1), en particulier lave-vaisselle, comprenant au moins un actionneur à commande électrique (20), une première source de tension (30) destinée à fournir une puissance d'activation (PE) à l'actionneur (20) et une deuxième source de tension (40) destinée à fournir au moins une puissance de maintien (PH) à l'actionneur (20), et une unité de commande (50), qui est configurée pour connecter électriquement la première source de tension (30) à l'actionneur (20) afin d'activer l'actionneur (20), et après un intervalle d'activation, pour déconnecter électriquement la première source de tension (30) de l'actionneur (20) et pour connecter électriquement la deuxième source de tension (40) à l'actionneur (20), **caractérisé en ce qu'**une puissance d'activation (PE) absorbée par l'actionneur (20) est supérieure à 50 % d'une puissance de sortie maximale de la première source de tension (30).

2. Appareil électroménager à circulation d'eau selon la revendication 1, **caractérisé par** une pluralité d'actionneurs à commande électrique (20), dans lequel la première source de tension (30) est conçue pour fournir la puissance d'activation (PE) pour chaque actionneur individuel (20) de la pluralité, et dans lequel la deuxième source de tension (40) est conçue pour fournir simultanément la puissance de maintien (PH) à au moins deux actionneurs (20) de la pluralité, dans lequel l'unité de commande (50) est conçue en outre, afin d'activer au moins deux actionneurs (20) de la pluralité, pour connecter électriquement la première source de tension (30) à un premier actionneur (20) de la pluralité, et, après l'intervalle d'activation du premier actionneur (20), pour déconnecter électriquement la première source de tension (30) du premier actionneur (20) et pour connecter électriquement la deuxième source de tension (40) au premier actionneur (20), et pour connecter électriquement la première source de tension (30) à un autre actionneur (20) de la pluralité, et, après l'intervalle d'activation de l'autre actionneur (20), pour déconnecter électriquement la première source de tension (30) de l'autre actionneur (20), et pour connecter électriquement la deuxième source de tension (40) à l'autre actionneur (20).

3. Appareil électroménager à circulation d'eau selon l'une des revendications 1 à 2, **caractérisé par** une pluralité de deuxièmes sources de tension (40), dans lequel une deuxième source de tension (40) respective de la pluralité est associée au moins à un actionneur (20) et est conçue pour fournir la puissance de maintien (PH) à l'au moins un actionneur associé (20).

4. Appareil électroménager à circulation d'eau selon l'une des revendications 1 à 3, **caractérisé en ce que** la première source de tension (30) et/ou la deuxième source de tension (40) ont chacune une puissance de sortie maximale de 15 W.

5. Appareil électroménager à circulation d'eau selon l'une des revendications 1 à 4, **caractérisé en ce que** la première source de tension (30) délivre une tension de sortie constante jusqu'à 48 V, de préférence jusqu'à 24 V et de manière particulièrement préférée jusqu'à 12 V, et la deuxième source de tension (40) présente une tension de sortie constante jusqu'à 48 V, de préférence jusqu'à 24 V et de manière particulièrement préférée jusqu'à 12 V.

6. Appareil électroménager à circulation d'eau selon l'une des revendications 1 à 5, **caractérisé en ce que** la première source de tension (30) délivre une tension de sortie plus élevée, en particulier au moins deux fois plus élevée que la deuxième source de tension (40).

7. Appareil électroménager à circulation d'eau selon l'une des revendications 1 à 6, **caractérisé en ce qu'**une tension de maintien de l'actionneur (20) est au maximum de 70 %, de préférence au maximum de 50 %, de manière préférée au maximum de 35 % et de manière encore plus préférée au maximum de 25 % d'une tension d'activation de l'actionneur (20).

8. Appareil électroménager à circulation d'eau selon l'une des revendications 1 à 7, **caractérisé en ce que** la puissance de maintien (PH) de l'actionneur (20) est au maximum de 70 %, de préférence au maximum de 50 %, de manière particulièrement préférée au maximum de 35 % et de manière encore plus préférée au maximum de 25 % de la puissance d'activation (PE) de l'actionneur (20).

9. Appareil électroménager à circulation d'eau selon l'une des revendications 1 à 8, **caractérisé en ce que** l'unité de commande (50) est conçue pour commuter de la première source de tension (30) à la deuxième source de tension (40) dans un délai de commutation, qui est inférieur à un délai de désactivation de l'actionneur (20).

10. Appareil électroménager à circulation d'eau selon l'une des revendications 1 à 9, **caractérisé en ce que** l'unité de commande (50) est conçue pour commuter de la première source de tension (30) à la deuxième source de tension (40) de sorte que, durant un intervalle de commutation, la première source de tension (30) et la deuxième source de tension (40) soient connectées simultanément à l'actionneur (20).

11. Appareil électroménager à circulation d'eau selon la revendication 10, **caractérisé en ce qu'**une diode (35) est disposée dans une liaison électrique entre la deuxième source de tension (40) et l'actionneur (20) de telle sorte qu'une circulation de courant de la première source de tension (30) vers la deuxième source de tension (40) est bloquée.

12. Appareil électroménager à circulation d'eau selon l'une des revendications 1 à 11, **caractérisé en ce que** l'actionneur (20) est un actionneur électromagnétique et/ou un actionneur thermoélectrique.

13. Procédé de fonctionnement d'un appareil électroménager à circulation d'eau (1), en particulier d'un lave-vaisselle, comprenant au moins un actionneur à commande électrique (20), une première source de tension (30) destinée à fournir une puissance d'activation (PE) à l'actionneur (20) et une deuxième source de tension (40) destinée à fournir au moins une puissance de maintien (PH) à l'actionneur (20),
le procédé comprenant :
la connexion (S1) de l'actionneur (20) à la première source de tension (30) pour fournir une puissance d'activation (PE) afin d'activer l'actionneur (20),
la déconnexion (S2) de la première source de tension (30) de l'actionneur (20) après l'expiration d'un intervalle d'activation, et
la connexion (S3) de l'actionneur (20) à la deuxième source de tension (40) pour fournir une puissance de maintien (PH) afin de maintenir sous tension l'actionneur (20),
**caractérisé en ce qu'**une puissance d'activation (PE) absorbée par l'actionneur (20) est supérieure à 50 % d'une puissance de sortie maximale de la première source de tension (30).

14. Procédé selon la revendication 13, comprenant en outre :
la connexion de la première source de tension (30) à un autre actionneur (20), une fois que la première source de tension (20) a été déconnectée de l'actionneur (20), afin d'activer l'autre actionneur (20),
la déconnexion de la première source de tension (30) de l'autre actionneur (20) après l'expiration d'un intervalle d'activation, et
la connexion de l'autre actionneur (20) à la deuxième source de tension (40) pour maintenir sous tension l'actionneur (20).
